## Europäisches Patentamt
## European Patent Office
## Office européen des brevets

(19)

(11) Publication number: **0 070 689**
**A1**

(12)
# EUROPEAN PATENT APPLICATION

(21) Application number: **82303713.0**

(22) Date of filing: **15.07.82**

(51) Int. Cl.³: **B 23 K 5/18**

(30) Priority: **17.07.81 US 284168**

(43) Date of publication of application: **26.01.83**
**Bulletin 83/4**

(84) Designated Contracting States: **CH DE FR GB LI**

(71) Applicant: **DEERE & COMPANY, 1 John Deere Road, Moline Illinois 61265 (US)**

(72) Inventor: **Morse, Stephen R., Box 593, Orion Illinois 61273 (US)**
Inventor: **Kane, John Beveridge, Jr., 10307, 108th Street West, Taylor Ridge Illinois 61284 (US)**

(74) Representative: **Pears, David Ashley, REDDIE & GROSE 16 Theobalds Road, London WC1X 8PL (GB)**

(54) Welding process for applying a hardfacing to a nodular iron base metal.

(57) A hardfacing 16 is applied to a nodular iron base metal 15 without preheating or postheating the base metal. Initially a gas tungsten arc welding torch is applied to the base metal (at ambient temperature) to form a puddle of the base metal. Then a filler metal, e.g. a high chromium iron, is fed into contact with the arc to form a melt of the filler metal on the base metal. The base metal is then allowed to cool to ambient temperature with postheating.

EP 0 070 689 A1

WELDING PROCESS FOR APPLYING A HARDFACING
TO A NODULAR IRON BASE METAL

Background of the Invention

This invention relates to welding and more particularly to a welding process for applying a hardfacing to a nodular iron work piece.

Ductile iron, also known as spheroidal graphite iron and nodular iron, is used in many applications in the construction of heavy duty machinery, gears, rolls and other applications requiring wear resistance and strength rather than steel because of ductile iron's lower cost. However, in many applications, the wear resistance of ductile iron is still far less than desirable to provide long equipment life. One known way to improve greatly the wear resistant properties of nodular iron is to fuse a hardfacing material to nodular iron parts.

The identification of acceptable techniques for welding cast iron has been difficult. Cast irons, which have a much higher carbon content than steel, can form hard eutectic carbides on solidification after fusion welding and, in addition, hard constituents such as martensite and bainite can be formed in the heat-affected zone immediately adjacent the weld. The formation of hard and brittle microstructural constituents in cast irons can seriously impair machinability and result in cracking, either spontaneously or from service-applied loads. One known method for preventing or minimizing the production of hard and brittle structures in the casting is to preheat the casting prior to welding and slowly cool it after welding so that the heat-affected zone is able to cool sufficiently slowly, thereby avoiding the formation of carbides and martensite.

One specific example of a nodular iron part which has been successfully hardfaced by this technique is the stalk roll used in a corn header of a combine. A stalk roll is essentially a tubular, cylindrical roll with a plurality of ribs or flutes extending longitudinally of the exterior of the roll. The rolls are used in pairs to grip a stalk of corn therebetween and pull it vertically downward through a row unit of the corn header, thereby stripping the ear of corn from the stalk in the harvesting operation. In the harvesting operation, the rolls are fully exposed to the dirt and sand in the field. The portion of the roll which is subject to the highest abrasive action are the ribs. Thus, by hardfacing the ribs, the life of the roll is greatly enhanced.

One known method for the application of a hardfacing to the ribs of a stalk roll is by use of a gas plasma arc welding process. The process includes the steps of preheating the nodular iron roll to a red-hot temperature -- a temperature in the range of 800 to 1000°C.

The roll is then placed under a plasma arc hardfacing head. A molten puddle of the base metal is produced by the gas plasma. A filler metal of powdered chromium carbide (composition in percent by weight 41% Cr, 7% C, 1% Si .08 B, and balance Fe) is then added to the molten puddle. The roll is allowed to cool without postheating. The time and cost of hardfacing stalk rolls by this method has proved to be a deterrent to the widespread use of stalk rolls with a hardfacing, although the abrasive resistant quality of the rolls so produced is good. Attempts to simplify and reduce the cost of the process by eliminating the preheating step have not proven successful. Without preheating the stalk roll, transverse cracks were produced in the hardfacing and in the base metal which led to spalling of the hardfacing and base metal in the abrasive environment of field use.

Accordingly, it is an object of this invention to provide a process which overcomes these problems and enables components of high hardness and abrasion resistance to be produced more cheaply without preheating or postheating of the base metal. The method according to the invention is defined in claim 1 below.

In the preferred practice, a nodular iron base metal or workpiece is initially disposed at a work station. The temperature of the base metal may be equal to the ambient temperature of the work station; that is, the base metal does not have to be preheated to an elevated temperature. A gas tungsten arc welding torch is then applied to the base

metal to form a puddle of the base metal. A filler metal is fed into contact with the base metal puddle to form a melt of the filler metal. The torch and filler metal are moved in unison over the portion of the base metal to be hardfaced. When the torch is moved, the puddle of base metal and the melt of filler metal solidify to form a hard surface on the base metal. The filler metal is selected from the group consisting of cast iron filler metals having a carbide forming metal as a significant component thereof. The base metal is then allowed to cool without post-heating to the ambient temperature of the work station immediately following the completion of the application of the melt of filler metal to the base metal surface.

There is no postheating of the base metal or no external heating of the base metal at any time other than by the torch. The elimination of the need for pre-heating and post-heating has reduced the cost of this welding process relative to other prior art processes and provides a hard facing on a base metal of high hardness and abrasion resistance.

Description of the Preferred Embodiments

In accordance with the practice of a preferred embodiment of this invention, a nodular iron base metal or workpiece is selected for hardfacing. The specific shape of the workpiece is not critical although the process has its greatest utility in connection with the application of a hardfacing of a projection, fluting, etc., of a larger workpiece. The projection rib or fluting may range in thickness width between about .2 cm. and 1.3 cm. The workpiece may be in its as-cast condition and may, of course, be cleaned, but this has been found not to be necessary. The workpiece is disposed by an operator at a work station maintained at normal room temperatures for human comfort such as between 18° C. to 27° C. and the workpiece assumes the ambient temperature of the work station.

A conventional gas tungsten arc welding torch is applied to the workpiece to form a puddle of the base metal. The welding torch may be of a conventional construction such as a Model MB50-E manufactured by Airco Corp., Union, N. J., and may be operated at a voltage between 12 and 24, at currents between 110 to 290 amps, and with a D.C. straight polarity power source. The electrode composition of the above-mentioned torch is 2% thoriated tungsten and has a current carrying capacity of up to 410

amp and a cylindrical shape. The shielding gas may be argon, helium or mixtures of these gases. Argon gas is preferred.

Following the formation of a puddle of the base metal, a filler metal is fed into contact with the puddle to apply a melt of the filler metal to a portion of the surface of the base metal to be hardsurfaced. The filler metal and the torch are then moved in unison together over the remainder of the surface to be covered with a hardfacing. A stringer or weave technique may be used. The hardfacing is applied in thicknesses between a minimum of about .5 mm. to a minimum of 12.7 mm. It will be recognized by those skilled in the art that it is advantageous to obtain the desired properties such as abrasion resistance with as thin a layer of hardfacing as possible to reduce the cost and enhance the toughness provided by the base metal support of the hard-surfacing. The feeding rate of the filler metal and travel speed of the torch are adjusted such that the desired hardfacing thickness is obtained at an energy input per unit length of base metal surface area between about 230 J/mm and 280 J/mm.

Also, in order to maximize abrasion resistance and hardness of the workpiece, it is preferred to control the welding parameters such that the percentage dilution (defined as 100 times the quotient of the amount of base metal melted divided by the sum of filler metal added and base metal melted) is about 5% to 15%. About 10% is preferred.

The filler metal is selected from the group of iron base alloys, cobalt base alloys, nickel base alloys and carbide composites. Such filler metals are described in more detail in the Welding Handbook, Volume 2, 7th Edition, pp. 553 and 561 which is incorporated by reference herein. A filler metal composed of 20% chromium, 5.2% carbon, 1% manganese, .7% silicon, and .7% molybdenum and the balance iron is exemplary of a preferred filler metal.

Following the application of the filler metal to the base metal, the workpiece is then allowed to cool without postheating to the ambient temperature of the work station from a time immediately following the application of the hardfacing. The practice of the foregoing process may be performed manually or automated mechanically using conventional techniques as will be recognized by those skilled in the art.

To further illustrate the practice of a process in accordance with the features of this invention, the following examples have been performed.

## Example 1

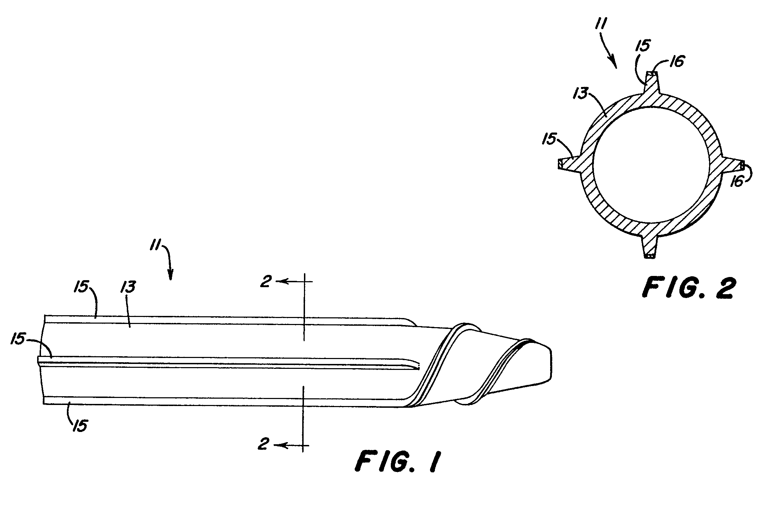

In FIGS. 1 and 2, a workpiece 11 to which a hardfacing 16 has been applied is shown. Workpiece 11 is a stalk roll having utility as described in the Background of the Invention, set forth above. Stalk roll 11 is comprised of a tubular shaft 13 with a plurality of longitudinally extending flutes 15. The roll is made of nodular iron having a composition as follows: 3.4-3.8% C, 2.4-2.8% Si, 35-.65% Mg, 2.0-2.5% Cu, .04-.08% Mn, .05-.09% Cr, .008-.024% Ph and balance Fe. The workpiece was fixed in position at a work station. The workpiece did not undergo any preheating and was at the ambient temperature (21°C) of the work station. A conventional gas tungsten arc welding torch (Airco Corp., Model MB50-B) was then applied to one end of one of the flutes. The operating parameters of the torch were welding current: 260-280 amps, voltage: 14-16 volts, electrode composition: 2% thoriated tungsten, current carrying capacity 400 amps, shape: Cylindrical, and shielding gas argon.

An arc was established between the base metal and the torch in a conventional manner by imposing a high frequency, high voltage signal on the welding circuit. The torch was held in its initial position for about 1 to 5 seconds until a puddle of base metal is established. A filler metal (composition 20% Cr, 5.2% C, 1% Mn, .7% Si, .7% Mo, balance Fe) in powder form in steel tube of 1.57 mm. diameter was then fed at the rate of 76-90 cm. per minute into the puddle of base metal as the torch was moved using a weave technique along one of flutes 15 of roll 11. A hardfacing 16 of about 4 mm. wide and 2 mm. thick was applied along the entire length of the flute. Each flute 15 of the roll was hardfaced in the same manner. Immediately following the application of the application of the hard surfacing to the last flute, the roll was allowed to cool to the ambient temperature of the work station without post-heating. A stalk roll having the flutes hardfaced as described above and an identical nodular iron stalk roll which has not been hardfaced were subjected to a wet sand rubber wheel wear test, and it was found that the hardfaced stalk roll had a wear resistance 18 times that of the roll which had not been hardfaced. The wear test is performed to ASTM

G-65 Procedure B specification. The hardness of a flute which had not been hardfaced was 2000 mg/p (20 Rc) compared to the hardness of 6000 to 7000 mg/p (57-63 Rc) of a hardfaced flute. The hardfaced stalk roll was examined for cracks using a magna-flux and black light and was found to have a crack propensity per flute of 23.

### Examples 2 to 7

Additional stalk rolls were hardfaced and evaluated as described in Example 1 except as noted herein. The results are summarized in the following table. Data from Example 1 and an uncoated nodular iron stalk roll are also included in the table for the purpose of comparison.

### TABLE

TABLE

| Example Number | Filler Metal Diameter (mm) | Consumed (cm) | Composition Percent by Weight | Form | Crack Propensity per Flute | Ratio of Wear Resistance Relative to Reference | Surface Hardness Rockwell C |
|---|---|---|---|---|---|---|---|
| Reference- Uncoated Nodular Iron | -- | -- | | | -- | 1.0 | 14-18 |
| 1 | 1.57 | 351 | 20 Cr; 5.2 C; 1 Mn; .7 Si; .7 Mo; balance Fe. | Powder in steel tube | 23 | 18.0 | 56-60 |
| 2 | 2.36 | 272 | WC | Particulate in Ni tube | | 1.3 | 14-32 |
| 3 | 2.36 | 272 | 26 Cr; 4 C; 1.5 Mn; .5 Mo; balance Fe. | Powder in steel tube | 8 | 32.6, 17.7 | 57-63 |
| 4 | 2.36 | 339 | 40 Cr; 5C; Mn 1; Mo 1; balance Ni. | powder in steel tube | 23 | 10.4 | 40-47 |
| 5 | 1.98 | 297 | 27 Cr; 3.3 Cr; .95 Si; .8 Mn; 3 Co; 3.6 others; balance Fe. | Powder in Ni tube | 18 | 24.6 | 59-64 |
| 6 | 2.36 | 333 | 30 VC; 10 WC; balance Fe. | Powder in steel tube | 18 | 34.4 | 57-61 |
| 7 | 2.36 | 286 | 16 Cr; 3.6 C; 1 Si; 1.3 Mn; .5 Mo; balance Fe. | Powder in steel tube | 8 | 16.7 | 55-60 |

Test results for crack propensity ranged widely in number; however, none of the cracks were found extending into the base material.

The surface hardness data suggests that high hardness, high carbon and high quantities of carbide forming elements (chromium and vanadium) contribute to improve wear resistance. Examination of the microstructures indicates that the high carbon, high alloy grades contain the largest amount of iron alloy carbides.

From the foregoing examples, it can be seen that nodular iron can be successfuly hardfaced without the requirement of preheating or postheating to obtain superior wear resistance and a hardness, thereby providing a stalk roll of high quality and yet significantly lower cost compared to prior art techniques for hardfacing.

While nodular iron is the preferred base metal because of its strength, wear resistance and relatively low cost, it will be recognized that the process of this invention may also be utilized with other iron based alloys as the base metal including high alloy irons, martensitic alloy steels and austenitic steels.

It will be recognized that the process of this invention has been described in accordance with a preferred embodiment thereof and that other modifications and variations of the process will be apparent to those skilled in the art. Accordingly, it is intended that the appended claims cover all such variations and modifications as are within the true spirit and scope of the invention.

- 9 -

CLAIMS

1.      A process for applying a hardfacing to a workpiece made
of an iron-based alloy, especially nodular iron, characterised
by the combination of the steps of:

        a) applying a gas tungsten arc welding torch to the workpiece, without preheating the workpiece, to form a puddle of the
base metal;

        b) feeding a filler metal selected from the group
consisting of iron base alloys, cobalt base alloys, nickel base
alloys and carbide composites into contact with the arc of the
torch to apply a melt of the filler metal to a portion of the
surface of the workpiece;  and

        c) allowing the workpiece to cool to the ambient temperature
of the work station without postheating the workpiece.

2.      A process according to claim 1, characterised in that
the hardfacing (16) is applied to a projection (15) of the
workpiece (13).

3.      A process according to claim 1 or 2, characterised in that
the filler metal is a high chromium iron.

4.      A process according to claim 1, 2 or 3, characterised in
that the dilution of the filler metal into the base metal is between
5% and 15%.

**FIG. 2**

**FIG. 1**

## EUROPEAN SEARCH REPORT

European Patent
Office

| Category | Citation of document with indication, where appropriate, of relevant passages | Relevant to claim |
|---|---|---|
| | No documents have been disclosed | |

**CLASSIFICATION OF THE APPLICATION (Int. Cl. 3)**

B 23 K 5/18

**TECHNICAL FIELDS SEARCHED (Int.Cl. 3)**

B 23 K 5/00
B 23 K 31/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims |
|---|---|
| X | |

| Place of search | Date of completion of the search | Examiner |
|---|---|---|
| VIENNA | 05-10-1982 | BENCZE |

EPO Form 1503.1 06.78